(19) Europäisches Patentamt
European Patent Office
Office européen des brevets

(11) **EP 4 163 099 B1**

(12) **EUROPEAN PATENT SPECIFICATION**

(45) Date of publication and mention
of the grant of the patent:
**03.09.2025 Bulletin 2025/36**

(21) Application number: **21817672.5**

(22) Date of filing: **02.06.2021**

(51) International Patent Classification (IPC):
*B29C 43/32* (2006.01)   *B29C 43/36* (2006.01)
*B30B 15/06* (2006.01)   *D03D 1/00* (2006.01)
*D03D 7/00* (2006.01)   *D03D 11/00* (2006.01)
*D03D 15/267* (2021.01)   *D03D 15/49* (2021.01)
*D06M 15/59* (2006.01)   *D06N 3/12* (2006.01)

(52) Cooperative Patent Classification (CPC):
**D03D 11/00; B29C 43/32; B29C 43/36;
B30B 15/061; D03D 1/00; D03D 7/00;
D03D 15/267; D03D 15/49; D06M 15/59;
D06N 3/125; B29C 2043/3216; D06M 2101/36;
D10B 2505/00**

(86) International application number:
**PCT/JP2021/020978**

(87) International publication number:
**WO 2021/246436 (09.12.2021 Gazette 2021/49)**

(54) **CUSHIONING MATERIAL FOR HOT PRESSING**

POLSTERMATERIAL ZUM HEISSPRESSEN

MATÉRIAU D'AMORTISSEMENT POUR PRESSAGE À CHAUD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2020 JP 2020097156**

(43) Date of publication of application:
**12.04.2023 Bulletin 2023/15**

(73) Proprietor: **Yamauchi Corporation
Hirakata-shi, Osaka 573-1132 (JP)**

(72) Inventors:
• **OZEKI, Takamitsu
Hirakata-shi, Osaka 573-1132 (JP)**
• **YOSHIDA, Akira
Hirakata-shi, Osaka 573-1132 (JP)**

(74) Representative: **Müller Hoffmann & Partner
Patentanwälte mbB
St.-Martin-Straße 58
81541 München (DE)**

(56) References cited:
**WO-A1-2004/103691    WO-A1-2012/169011
JP-A- 2016 010 945    JP-A- 2018 075 631
JP-A- 2020 059 180**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## EP 4 163 099 B1

**Description**

TECHNICAL FIELD

The present invention relates to a cushion material for hot pressing.

BACKGROUND ART

In production of components of precision equipment including a printed circuit board such as a copper-clad laminate, a flexible printed circuit board, and a multilayer board, an IC card, a liquid crystal display board, and a ceramic laminate (hereinafter, collectively referred to as "laminate"), press forming, thermocompression bonding, or the like is performed.

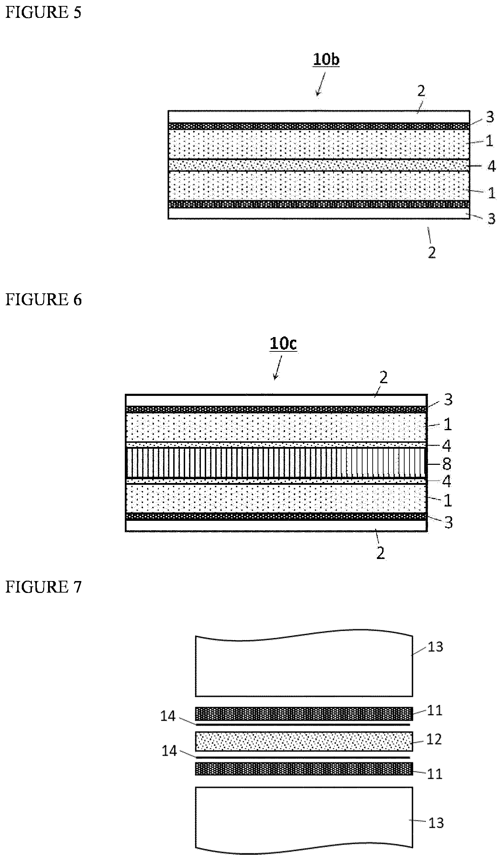

For example, in a process of press forming and thermocompression bonding in production of laminates such as printed circuit boards, it is a common practice to sandwich a laminate material (workpiece to be pressed) 12 to be subjected to pressing between heating platens 13, 13 acting as heating-pressing means and apply pressure and heat at certain levels to the laminate material 12, as illustrated in Figure 7. To obtain a formed article with good precision, it is necessary to keep the heat and pressure applied to the workpiece 12 to be pressed uniform all over the workpiece 12 to be pressed in hot pressing. For this purpose, the hot pressing is performed with planar cushion materials 11 interposed between the heating platens 13 and the workpiece 12 to be pressed. Mirror plates may be additionally interposed between the cushion materials 11 and the workpiece 12 to be pressed.

Typical properties that the cushion materials 11 are required to have include cushioning properties for absorbing unevenness of the heating platens 13 and the workpiece 12 to be pressed, in-plane uniformity for transmitting temperature and pressure from the heating platens 13 to the workpiece 12 to be pressed uniformly within the entire press plane, heat transfer properties for transferring heat from the heating platens 13 to the workpiece 12 to be pressed efficiently, heat resistance for resisting pressing temperature, and the like.

Patent Document 1 discloses a cushion material 1 for hot pressing that is made of woven fabric and rubber impregnated into the woven fabric and includes a fiber-rubber composite material layer having pores therein.

Here, the fifth generation mobile telecommunications system (hereinafter, referred to as "5G") has been in the limelight due to having advantages such as Enhanced Mobile Broadband (eMBB), Ultra-Reliable and Low Latency Communications (URLLC), and massive Machine Type Communication (mMTC). At the same time, for full-fledged commercialization of 5G, designing printed circuit boards for higher frequencies has become urgent. That is, as communication frequencies are increased with the introduction of 5G, there are demands for printed circuit boards that are excellent in semiconductor properties and electric properties and have low transmission loss for communication base stations and various types of terminals.

As materials of boards, glass epoxy resin (FR-4), polyphenylene ether (PPE) resin, and polyimide (PI) resin have been in the mainstream, whereas fluoro (PTFE) resin, liquid crystal polymer (LCP), and the like having low transmission loss are receiving attention.

LIST OF PRIOR ART DOCUMENTS

PATENT DOCUMENT

Patent Document 1: WO 2008/065969

Furthermore, in WO 2012/169011 A1 it is described a surface layer material for sheet-like cushion material arranged on surface layer of cushion material for hot press, and a resin layer which is arranged on one surface side of the surface layer material and covers one surface of the surface layer material; and a resin layer which is disposed on one surface side of the surface layer material and covers one surface of the surface layer material, a rubber layer arranged on the other surface side of the surface layer material and covering the other surface of the surface layer material, and a woven fabric layer arranged between the resin layer and the rubber layer and using a bulky yarn on at least one of warp and weft. The woven fabric layer is provided on the resin layer side, and is provided with a woven fabric-resin composite layer formed by impregnating a part of the woven fabric with a resin constituting the resin layer, and a woven fabric-rubber composite layer provided on the rubber layer side and formed by impregnating a part of the woven fabric with rubber constituting the rubber layer. The surface layer material for the cushion material is provided with a gap inside the woven fabric layer. The resin is preferably a mixture of one or more resins selected from the group consisting of fluororesin, phenol resin, melamine resin, epoxy resin, unsaturated polyester resin, silicone resin, polyimide resin, thermosetting acrylic resin, furan resin, urea oil and fat, diallyl phthalate resin, and polyurethane resin.

WO 2004/103691 A1 relates to a sheet for thermal pressing, which comprises a base material in a sheet form and a releasing coating film formed on the surface of the base material, wherein the coating film comprises, as a parent

2

material, a resin composition having 5 to 55 mass % of an organic powder and 5 to 55 mass % of an inorganic powder both relative to 100 mass % of the resin composition, incorporated therein, with the proviso that the sum of the percentages of the powders is 30 to 60 mass %. The coating film perfectly covers the base material and imparts gas tightness to the sheet for thermal pressing. A resin such as a fluoro resin, a phenol resin, a melamine resin, an epoxy resin, an unsaturated polyester resin, a silicone resin, a polyimide resin, a thermosetting acrylic resin, a furan resin, a urea resin, a diallyl phthalate resin, a polyurethane resin and the like is used as a single, a blend or a copolymer; especially, the polyimide resin and the fluoro resin are preferable.

SUMMARY OF INVENTION

TECHNICAL PROBLEM

In a case where a conventional board made of glass epoxy resin, polyphenylene ether, or the like is subjected to press forming, its forming temperature is about 250°C or less. However, in a case where fluororesin, liquid crystal polymer, or the like is used, it is necessary to perform the press forming at higher temperature (280°C to 400°C). Therefore, cushion materials for pressing are required to be more excellent in properties at high temperature than ever.

However, since the cushion material for pressing disclosed in Patent Document 1 is impregnated with rubber, when the cushion material is used in pressing at a high temperature of 280°C or more, the cushion material deteriorates in an early stage, causing decrease in physical properties such as cushioning properties, separation between layers, and the like.

An objective of the present invention is to provide a cushion material for hot pressing that can maintain good cushioning properties even when used in high-temperature pressing at 280°C or more repeatedly. The above objects are solved by the claimed matter according to the independent claim.

SOLUTION TO PROBLEM

In order to achieve the objective, the present inventors conducted studies about materials combining cushioning properties and heat resistance, which are alternatives to rubber. In the course of selecting material excellent in heat resistance, the present inventors paid attention to resins such as polyimide resin. However, the present inventors expected that the polyimide resin would be inappropriate for a cushion material because a hardness of polyimide is 100 in terms of type A durometer hardness and 78 in terms of type D durometer hardness, which meant that the polyimide resin is a hard material compared with fluoro rubber (type A durometer hardness: 50 to 95, type D durometer hardness: 20 to 40). To use such hard polyimide resin as a material to partly form a cushion material, the present inventors conducted various studies and found, unexpectedly, that it is possible to provide good cushioning properties in a case where polyimide resin is caused to be adhered to surfaces of fibers forming woven fabric for which glass fiber texturized yarns are used as its warp and/or weft, by which the present inventors completed the present invention.

The present invention is based on such findings, and the present invention is "a cushion material for hot pressing including a cushion layer, wherein the cushion layer includes woven fabric formed by fibers and polyimide resin adhered to the surfaces of the fibers forming the woven fabric and has pores in the cushion layer, and warp and/or weft of the woven fabric is texturized yarns made of glass fiber".

ADVANTAGEOUS EFFECT OF INVENTION

According to the present invention, it is possible to provide a cushion material for hot pressing that can maintain good cushioning properties even when used in high-temperature pressing at 280°C or more repeatedly.

BRIEF DESCRIPTION OF DRAWINGS

[Figure 1] Figure 1 is a diagram illustrating a cushion material 10 for hot pressing according to the present embodiment.
[Figure 2] Figure 2 is a diagram illustrating a texturized yarn (bulked yarn) 1a made of glass fibers.
[Figure 3] Figure 3 is a diagram illustrating a typical glass fiber yarn (single yarn or twisted yarn) 1b.
[Figure 4] Figure 4 is a diagram illustrating a cushion material 10a for hot pressing according to another embodiment.
[Figure 5] Figure 5 is a diagram illustrating a cushion material 10b for hot pressing according to still another embodiment.
[Figure 6] Figure 6 is a diagram illustrating a cushion material 10c for hot pressing according to still another embodiment.

[Figure 7] Figure 7 is a diagram illustrating a press forming apparatus for a printed circuit board or the like.

DESCRIPTION OF EMBODIMENTS

A cushion material for hot pressing according to the present invention will be described below in detail with reference to the drawings.

[Cushion material 10 for Hot Pressing According to Present Embodiment]

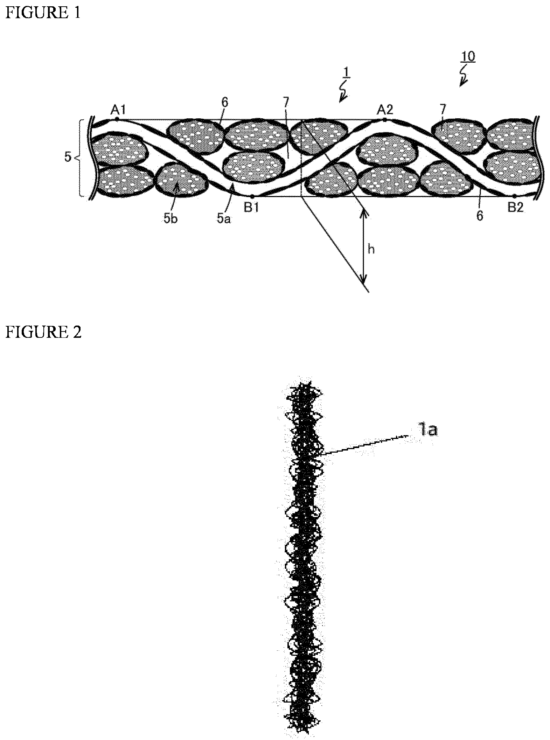

Figure 1 illustrates a cushion material 10 for hot pressing according to the present embodiment. As illustrated in Figure 1, the cushion material 10 for hot pressing according to the present embodiment includes at least a cushion layer 1. The cushion layer 1 is a sheet-like cushion member (cushion sheet) including woven fabric 5 and polyimide resin 6 that is adhered to surfaces of fibers forming the woven fabric 5. The cushion layer 1 has pores 7 therein. In the cushion layer 1, warp 5a and/or weft 5b of the woven fabric 5 is texturized yarn made of glass fiber. In Figure 1, the warp 5a is twisted yarn made of glass fiber and the weft 5b is the texturized yarn made of glass fiber.

Since the cushion material 10 for hot pressing according to the present embodiment includes such a cushion layer 1, the cushion material 10 can maintain good cushioning properties even when used in high temperature pressing at 280°C or more repeatedly.

As a fiber for forming the woven fabric 5 of the cushion layer 1, a texturized yarn made of glass fiber is used. The texturized yarn made of glass fiber is a yarn that has a large occupancy area and in which short fibers forming the glass yarn are not parallel to one another but are pulled while tangled up untidily. In other words, the texturized yarn has a swell like a woolen yarn, and a woven fabric made of texturized yarns has many pores therein unlike typical woven fabrics.

The cushion layer 1 is a sheet-like article. If a thickness of the cushion layer 1 is too small, the cushion layer 1 may have poor cushioning properties, and if the thickness is too large, the cushioning part 1 may have poor heat transfer properties. Thus, an appropriate thickness of the cushion layer 1 is preferably within the range of 0.5 to 5.0 mm, which however depends on a usage of the cushion layer 1. In a case where two or more cushion layers 1 are to be stacked and used, a total thickness of the cushion layers 1 is preferably within the range of 0.5 to 5.0 mm.

In the cushion layer 1, the polyimide resin 6 is adhered to the surfaces of the fibers forming the woven fabric 5. The polyimide resin 6 moderately penetrates into pores 7 included in the texturized yarn and pores 7 between the yarns but does not close the pores 7 completely, and thus pores 7 remain in the cushion layer 1. Therefore, the cushion material 10 for hot pressing according to the present embodiment exerts good cushioning properties. In addition, since the cushion material 10 includes the texturized yarns woven therein and has a woven fabric shape, the cushion material 10 is good in basis weight accuracy and excellent in in-plane uniformity compared with nonwoven fabric. Moreover, since the cushion material 10 has the woven fabric shape, the thickness of the cushion material 10 can be made to be smaller than that of nonwoven fabric and can be made to be excellent in heat transfer properties.

Glass fiber has heat resistance and thus is less susceptible to dimensional change by heat; therefore, a cushion material for hot pressing including glass fiber is good in dimensional stability even when used in high temperature pressing at 280°C or more repeatedly. The polyimide resin 6 adhered to the surfaces of the fibers forming the woven fabric 5 protects the glass fibers and connects contacts between the fibers (the contacts including contacts between the warp and the weft as well as contacts between filament fibers forming the texturized yarns). Therefore, the cushion material 10 for hot pressing according to the present embodiment can reduce breakage of the glass fibers when used in hot pressing repeatedly, can restrain permanent set in fatigue of the woven fabric 5, and thus can maintain good cushioning properties. That is, the cushion material 10 is excellent in durability.

The polyimide resin 6 is preferably a resin that has a decomposition temperature (temperature at weight loss of 5%) and a glass transition temperature more than a pressing temperature (280°C or more). For example, it is preferable to use a polyimide resin having a decomposition temperature and a glass transition temperature that are both 400°C or more.

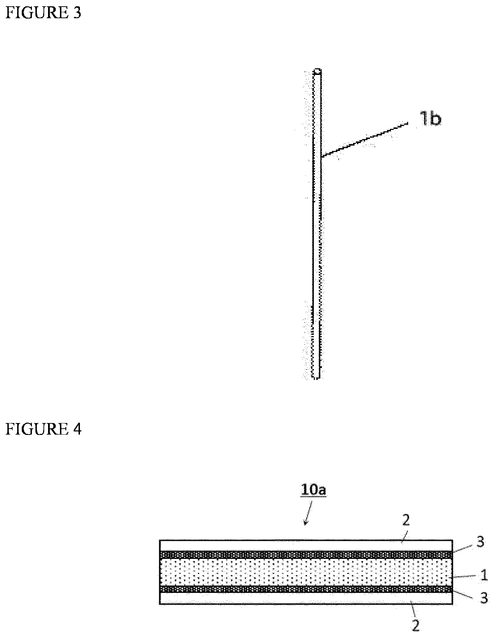

Figure 2 illustrates a texturized yarn (bulked yarn) 1a made of glass fibers. Figure 3 illustrates a typical glass fiber yarn (single yarn or twisted yarn) 1b. As illustrated in Figure 2, unlike a single yarn or a twisted yarn, the bulked yarn 1a is a textured yarn that is made to have a swell like a woolen yarn by opening a single yarn or swelling a twisted yarn. Having many pores in itself, the bulked yarn 1a can be impregnated with resin moderately. As texturized yarns, in addition to bulked yarns, staple yarns and sliver yarns are available. The staple yarns are obtained by spinning cotton-like glass short fibers into yarns. The sliver yarns are yarns obtained by twisting untwisted bulky short fibers (slivers). As a woven fabric including bulked yarns 1b made of glass fiber, for example, A305, A330, A400, A415, A450, A500, T330, T540, T790, T860, and T900 from UNITIKA LTD., KS4010, KS4155, and KS4325 from Nitto Boseki Co., Ltd., and the like are commercially available.

The woven fabric 5 of the cushion layer 1 may be a woven fabric that is woven from texturized yarns 1a used as one of its warp 5a and its weft 5b and normal glass fiber yarns 1b used as the other, or a woven fabric that is woven from texturized yarns 1a as both of its warp 5a and weft 5b. In a case where texturized yarns 1a are used as one of the warp 5a and the weft 5b, normal glass fiber yarns (single yarns or twisted yarns) 1b can be used as the other. The woven fabric 5 is preferably single weave or double weave. However, if the woven fabric 5 is triple weave or more than triple weave, the woven fabric 5 becomes too thick, its degree of loss of elasticity may be high, and its heat transfer properties may deteriorate. There is also a case where penetration of the polyimide resin 6 that is impregnated into the woven fabric 5 to be adhered to the surfaces of the fibers forming the woven fabric 5 may be insufficient. Note that basis weight accuracy and porous properties of the woven fabric can be adjusted by selecting a yarn count, a weave density, a weaving method, or the like as appropriate.

(Porosity of Cushion layer 1)

To make the cushion material 10 for hot pressing maintain its good properties, the cushion layer 1 needs to include adequate pores 7. However, a porosity of the cushion layer 1 may be difficult to grasp exactly by a method such as cross-section observation. The present inventors conducted intensive studies about how to evaluate the porosity of the cushion layer 1 and found that the porosity can be estimated from a result of a test conducted through the following procedure.

That is, when a thickness of the cushion material 10 for hot pressing is denoted by $t_0$, and a thickness of the cushion material 10 for hot pressing when the cushion material 10 for hot pressing is compressed under the following pressing test conditions is denoted by $t_1$, an amount of pores per unit volume can be estimated from a calculated value of "$(t_0 - t_1)$". This "$(t_0 - t_1)$" can be regarded as the amount of pores of the cushion layer 1 because a major part that has the pores 7 and is compressively deformed is the cushion layer 1 among members constituting the cushion material 10 for hot pressing (in addition to the cushion layer 1, surface layers 2, bonding layers 3, a bonding sheet part 4, etc. described later). Therefore, when a thickness of the cushion layer 1 in the cushion material 10 for hot pressing from which the other members such as the surface layers 2 are removed is denoted by $t_2$, a porosity Fn of the cushion layer 1 can be estimated from a calculated value of "$(t_0 - t_1) / t_2$". That is, when the cushion material 10 for hot pressing is compressed by an applied pressure of 10 MPa under a temperature environment at 25°C, most of the pores 7 that are present in the cushion layer 1 of the cushion material 10 for hot pressing are crushed, and thus this value can be considered to be a value that corresponds to the porosity, namely a pseudo porosity. The thickness $t_0$ of the cushion material 10 for hot pressing can be measured with, for example, a dial thickness gauge, a digital microscope, or the like. The thickness $t_1$ when the cushion material 10 for hot pressing is compressed under the following pressing test conditions can be measured with a testing machine having a compression function such as Instron universal material testing machine (from Instron (R)) and AUTOGRAPH precision universal testing machine (from Shimadzu Corporation).

[Conditions for Pressing Test to Evaluate Porosity]

    Applied pressure: 10 MPa
    Temperature: 25°C
    Pressing speed: 5 mm/min
    Sample size: 2.5 cm square

Suppose that the thickness $t_2$ of the cushion layer 1 used in the cushion material 10 for hot pressing is a thickness of a woven fabric 5 that is made of glass fiber in which texturized yarns are used as its warp 5a and/or its weft 5b. For the thickness $t_2$ of the cushion layer 1, a sample in a form of an about 2.5 cm square is taken from the cushion material 10 for hot pressing along a thread of warp 5a and a thread of weft 5b of woven fabric forming the cushion layer 1, a cross section of the sample is observed at 20 to 100x magnification under a digital microscope, and a measurement tool is used to measure a distance (h illustrated in Figure 1) between a line that connects two apexes of a fiber (a thread of warp 5a or weft 5b) meandering along the cross section of the cushion layer 1 that are positioned at an upper edge of the cushion layer 1 (a line that connects bending points A1 and A2 of the thread of warp 5a in the example illustrated in Figure 1) and a line that connects two apexes of the fiber that are positioned at a lower edge of the cushion layer 1 (a line that connects bending points B1 and B2 of the thread of weft 5b in the example illustrated in Figure 1).

The measurement is performed at a spot near a center portion of each side of the sample, and an average value of the measurement at the four spots is determined to be a value of the measurement. In a case where the cushion layer 1 includes a plurality of layers, a thickness of each layer is measured, and a total of the thicknesses is determined to be the thickness $t_2$ of the cushion layer 1.

The cushion material 10 for hot pressing is typically in a quadrilateral plate shape each side of which is 20 cm to 250 cm long. In a case of a cushion material for hot pressing that is relatively large, the sample for the measurement should be taken from a location for which in-plane variations are taken into consideration as much as possible. For example, in a case where a cushion material for hot pressing having a contour in which a square of side 30 cm or more is inscribed, four locations in total that are in vicinities of midpoints of lines connecting four corners and a center of the cushion material 10 for hot pressing are determined as locations for taking samples (2.5 cm square) for the measurement, and an average value of the measurement at the four locations is determined as its porosity. In a case where a cushion material for hot pressing having a contour in which a square of side less than 30 cm is inscribed, one location at a position 5 cm or more away from an edge is determined as a location for taking a sample (2.5 cm square) for the measurement.

A lower limit of Fn measured in this manner is preferably set at 0.20. By setting this range, the cushion material 10 for hot pressing can be provided with sufficient cushioning properties. The lower limit of Fn is more preferably set at 0.25. It is only required that Fn is satisfied at least by an unused cushion material 10 for hot pressing. However, a value of Fn decreases as use of the cushion material 10 for hot pressing increases. That is, when a cushion material 10 for hot pressing used in pressing a plurality of times still has Fn being 0.20 or more, the cushion material 10 for hot pressing can maintain good cushioning properties. For example, it is preferable that a cushion material 10 for hot pressing once subjected to pressing under conditions of 300°C and 10 MPa still have Fn being 0.20 or more.

In a case of a cushion material 10 for hot pressing according to the present invention, its retention of cushioning properties is 79% or more even after the cushion material 10 for hot pressing is subjected to pressing 100 times under conditions of 4 MPa and 400°C, a relatively high temperature, which will be described in EXAMPLE. Therefore, even if usage conditions (pressing temperature, pressure, the number of times, etc.) of a used cushion material 10 for hot pressing are unknown when the used cushion material 10 for hot pressing is obtained, when its Fn is within the range of 0.10 or more, it is possible to estimate that the cushion material 10 for hot pressing had Fn being 0.20 or more when the cushion material 10 for hot pressing was still unused.

No upper limit will be defined for Fn. The greater Fn is, the more advantageous it is in terms of cushioning properties; however, an upper limit of Fn is preferably set at 0.50 because heat transfer properties may deteriorate. The upper limit is more preferably 0.45. Even if Fn of an unused cushion material 10 for hot pressing is more than 0.50, it is only required that Fn becomes 0.50 or less after a first pressing.

Note that Fn described above can be managed with the same criterion in either a case where the cushion material 10 for hot pressing includes only the cushion layer 1 or a case where the cushion material 10 for hot pressing includes, in addition to the cushion layer 1, layers such as a bonding sheet part 4 and surface layers 2 on its surfaces with bonding layers 3 interposed therebetween. This is because, as described above, the surface layers 2, the bonding layers 3, and the bonding sheet part 4 have few pores, and most of pores present in the cushion material 10 for hot pressing are present in the cushion layer 1. For that reason, even in a case where cushion material 10 for hot pressing includes the layers in addition to the cushion layer 1, a porosity of the cushion material 10 for hot pressing as a whole is substantially the same as a porosity of the cushion layer 1 alone. In the present invention, a layer that is defined as a cushion layer 1 satisfies a condition that a base material of the layer is a woven fabric 5 that is made of glass fiber and in which texturized yarns are used as its warp 5a and/or its weft 5b, with the polyimide resin 6 being adhered to surfaces of fibers forming the woven fabric 5, and the layer has pores 7. Therefore, even a bonding sheet part 4, a bonding layer 3, and a surface layer 2 satisfying such condition are each regarded as a cushion layer 1. In other words, a layer that does not satisfy the condition that a base material of the layer is a woven fabric 5 that is made of glass fiber and in which texturized yarns are used as its warp 5a and/or its weft 5b, with the polyimide resin 6 being adhered to surfaces of fibers forming the woven fabric 5, and the layer has pores 7 is not a cushion layer 1.

[Cushion material for Hot Pressing According to Other Embodiments]

A cushion material 10 for hot pressing is only required to include at least a cushion layer 1 and may include only a cushion layer 1. A cushion layer 1 of a cushion material 10 for hot pressing may be single-layered or multi-layered.

Figure 4 illustrates a cushion material 10a for hot pressing according to another embodiment. As illustrated in Figure 4, in the cushion material 10a for hot pressing, surface layers 2 are stacked on surfaces of a cushion layer 1 with bonding layers 3 interposed therebetween. The surface layers 2 are provided mainly for imparting releasability to the cushion material for hot pressing. As a material of the surface layers 2, a synthetic resin film, a material to which releasable resin is applied on its a surface side of a base material made of woven fabric, or the like is available. It is particularly preferable to use a material that has dimensional stability during high-temperature use, is free from deformation and adhesion, and has a good releasability for resisting high-temperature pressing. In addition, a thickness of the surface layers 2 is preferably set at, for example, 0.1 to 0.5 mm. As the bonding layers 3, the same polyimide resin as the material used in the cushion layer 1 is preferably used.

Figure 5 illustrates a cushion material 10b for hot pressing according to another embodiment. As illustrated in Figure 5, in the cushion material 10b for hot pressing, two cushion layers 1 are stacked with a bonding sheet part 4 interposed therebetween. On an upper surface and a lower surface of the cushion layers 1, surface layers 2 are stacked with bonding layers 3 interposed therebetween. Since the cushion layers 1 are each formed by impregnating woven fabric made of glass fiber with resin, there is a limitation on a thickness of the cushion layers 1; however, the configuration in which two cushion layers 1 are stacked in this manner is advantageous in that an overall thickness of the cushion layers 1 can be further increased. Bonding the cushion layers 1 can be performed simply by using only adhesive; however, in this case, gaps between threads of the cushion layers 1 may be filled with the adhesive, which decreases their cushioning properties. For this reason, it is preferable to use the bonding sheet part 4. The bonding sheet part 4 is a sheet-like bonding layer that is obtained by, for example, applying adhesive to plain woven fabric formed with typical glass fiber yarns 1b. As the adhesive, polyimide resin is preferably used as with the material used in the cushion layers 1. Heat-resistant resin may be applied to sides of the produced cushion material for hot pressing so as to prevent fibers from fraying or lint from dropping from the sides.

Although the example illustrated in Figure 5 is an example in which two cushion layers 1 are included, the cushion material for hot pressing may include three or more cushion layers 1.

Figure 6 illustrates a cushion material 10c for hot pressing according to another embodiment. As illustrated in Figure 6, in the cushion material 10c for hot pressing, a heat insulating layer 8 is stacked between two cushion layers 1 with bonding sheet parts 4 interposed therebetween. The heat insulating layer 8 has sufficient heat resistance and durability that can be maintained at an operating temperature of the cushion material for hot pressing (e.g., 280°C or more). On an upper surface and a lower surface of the cushion layers 1, surface layers 2 are stacked with bonding layers 3 interposed therebetween. This can improve heat-insulation properties of the cushion material 10c for hot pressing. The heat insulating layer 8 is, for example, a sheet-like article that is obtained by impregnating a base material with inorganic binder. As the base material, for example, woven fabric or nonwoven fabric made of inorganic fiber may be used. Examples of the inorganic fiber include glass fiber, ceramic fiber, alumina fiber, silica fiber, and the like. Examples of the inorganic binder include alkylsilane, silica, ceramic, and the like.

Although the example illustrated in Figure 6 is an example in which two cushion layers 1 and one heat insulating layer 8 are included, the cushion material for hot pressing may include three or more cushion layers 1. In addition, the heat insulating layer 8 may be obtained by stacking a plurality of heat insulating layers 8 with a bonding layer 3 or a bonding sheet part 4 interposed therebetween. A thickness of the heat insulating layer 8 is preferably set, for example, within the range of 0.8 to 15 mm in accordance with required heat insulating performance. Note that a configuration with one thick heat insulating layer may be disadvantageous from viewpoints of durability and producibility; thus, in a case of a thick heat insulating layer 8, it is preferable to use one obtained by stacking two or more heat insulating layers that are relatively thin (e.g., about 1.0 mm) with a bonding layer 3 or a bonding sheet part 4 interposed therebetween. In this case, a total thickness is preferably set within the range of 0.8 to 15 mm.

In a case where the heat insulating layer 8 has pores, the heat insulating layer 8 bears cushioning properties of the cushion material for hot pressing as with the cushion layer 1. That is, since the heat insulating layer 8 has sufficient heat resistance and durability at the operating temperature (e.g., 280°C or more), the heat insulating layer 8 can maintain sufficient cushioning properties even when used in high-temperature pressing repeatedly, as with the cushion layers 1. For a cushion material for hot pressing including such a heat insulating layer 8 having pores, when a thickness of the cushion material 10 for hot pressing is denoted by $t_0$, and a thickness of the cushion material 10 for hot pressing when the cushion material 10 for hot pressing is compressed under the following pressing test conditions is denoted by $t_1$, $(t_0-t_1)$ can be regarded as a total amount of pores of the cushion layers 1 and the heat insulating layer 8. When a total thickness of the cushion layers 1 and the heat insulating layer 8 is denoted by $t_2'$, a total porosity Fn' of the cushion layers 1 and the heat insulating layer 8 can be estimated from a calculated value of "$(t_0 - t_1)/t_2'$". In a case where the heat insulating layer 8 has no pores, "$(t_0 - t_1)$" can be regarded as an amount of pores of the cushion layers 1 as in the example described above; thus, a cushion material for hot pressing including such a heat insulating layer 8 can be evaluated with Fn described above.

[Method for Producing Cushion material for Hot Pressing According to Embodiments]

First, the woven fabric in which warp and/or weft is texturized yarns (glass bulked yarns) made of glass fiber is prepared. There is no limit on how to weave the woven fabric, and a plain weave, a twill weave, and other known weaves can be adopted.

Next, polyimide resin is caused to be adhered to at least surfaces of fibers forming the woven fabric. For example, a cushion layer (cushion sheet) 1 can be fabricated by applying polyimide resin varnish having a concentration of 2 to 10% to the woven fabric and drying the woven fabric at a temperature of 150 to 250°C for 3 to 10 minutes, by which the polyimide resin is caused to be adhered to the surfaces of fibers forming the woven fabric. At this time, an amount of the adhered resin is preferably set at, for example, 20 to 200 $g/m^2$. The amount of the adhered resin can be adjusted by wring out the woven fabric under a pressure of 0.1 to 5 $kg/cm^2$ with resin rolls, rubber rolls, metal rolls, or the like.

As the polyimide resin varnish to be applied, it is preferable to use a varnish that is formulated by diluting the polyimide resin varnish with a solvent NMP (N-methyl-2-pyrrolidone) so that the polyimide resin varnish has a solid content concentration of 2 to 10% and a viscosity of about 20 to 100 mPa·s. Alternatively, solution of polyamic acid, which is a precursor of polyimide, may be used.

The woven fabric in which the polyimide resin is adhered on surfaces of its fibers obtained in this manner brings about a state in which fibers are fixed and covered, and it is possible to maintain shapes of and pores between texturized yarns (bulked yarns) even in high temperature use. As a result, it is possible to keep good cushioning properties even when the woven fabric is used repeatedly.

In a case where the cushion material for hot pressing includes surface layers (surface layer sheets) 2, surface layers 2 that are obtained by, for example, applying polyimide resin to one side of a sheet serving as a base material, then drying the sheet, and then applying polyimide resin to the other side, and then drying the sheet can be used.

In a case where the cushion material for hot pressing includes a bonding sheet part (bonding sheet) 4, a bonding sheet part 4 that is obtained by, for example, applying resin to both sides of a sheet serving as a base material and drying the sheet can be used. The resin is, for example, polyimide resin. The bonding sheet part 4 may be fabricated by applying polyimide resin varnish (with a thickness of 40 to 60 μm) to a PET film, semi-drying the polyimide resin varnish, and then peeling off the semi-dried polyimide resin varnish from the PET film into a filmy shape.

The cushion layer 1 and a plurality of sheet-like articles are stacked (e.g., a surface layer sheet 2, a cushion sheet 1, a bonding sheet 4, a cushion sheet 1, and a surface layer sheet 2 are stacked) and integrated by hot pressing.

In a case where the cushion material for hot pressing includes a heat insulating layer 8, a heat insulating layer 8 that is obtained by, for example, causing alkylsilane binder to be adhered to glass woven fabric prepared as a woven fabric material.

The cushion material for hot pressing according to the present invention can be used when press forming or thermocompression bonding is performed in production of laminates such as printed circuit boards, by a method as illustrated in Figure 7 as in conventional practices. That is, by performing hot pressing in a state where cushion materials 11 for hot pressing are interposed between heating platens 13 and a workpiece 12 to be pressed, heat and pressure applied to the workpiece 12 to be pressed can be kept uniform all over the workpiece 12 to be pressed.

EXAMPLE 1

Results of producing cushion materials in Examples and Comparative Examples and examining their various physical properties will be shown below. Examples 1 to 4 and Comparative Example 1 each have a configuration including surface layer sheets and a bonding sheet, and Comparative Examples 2 to 14 each have a configuration including only a cushion sheet and not including surface layer sheets or a bonding sheet.

(Example 1)

As a woven fabric material, there was prepared a double-twill-weave bulky glass woven fabric for which yarns each obtained by twisting two glass yarns (count 67.5 tex) (non-bulked yarns having a single fiber diameter of 5 μm and the number of single fibers of 2400) were used as its warp and yarns each obtained by twisting four glass yarns (count 67.5 tex) and bulking the twisted glass yarns (texturized yarns having a single fiber diameter of 5 μm and the number of single fibers of 4800) were used as its weft. In addition, as a resin material, there was prepared a polyimide resin varnish (concentration: 5%) having a decomposition temperature: 512°C and a glass transition temperature: 400°C or more. The glass woven fabric was impregnated with this polyimide resin varnish and then dried at 200°C for 5 minutes, by which cushion sheets in which polyimide resin was adhered to the woven fabric material in a proportion of 1.7% by mass were prepared.

At the same time, as surface layer sheets, there were prepared surface layer sheets each obtained by applying polyimide resin varnish to one side (surface side) of a plain-weave glass woven fabric, drying the plain-weave glass woven fabric, then applying polyimide resin varnish to the other side (bonding layer), and drying the plain-weave glass woven fabric. In addition, as a bonding sheet, there was prepared a bonding sheet obtained by applying polyimide resin varnish on both sides (bonding layers) of a plain-weave glass woven fabric and drying the plain-weave glass woven fabric.

The obtained surface layer sheet, cushion sheet, bonding sheet, cushion sheet, and surface layer sheet were stacked in this order, pressed under conditions: 10 MPa × 190°C and heating 60 minutes + cooling 10 minutes, and then subjected to heat treatment of 300°C × 5 hours, by which a sample of a cushion material for hot pressing was obtained.

(Example 2)

Cushion sheets each of which had an amount of adhered resin that was changed to 3.4% by mass from that of Example 1 were used to obtain a sample of a cushion material for hot pressing having the same configuration as that of Example 1.

(Example 3)

Cushion sheets each of which had an amount of adhered resin that was changed to 8.8% by mass from that of Example 1 were used to obtain a sample of a cushion material for hot pressing having the same configuration as that of Example 1.

(Example 4)

Cushion sheets each of which had an amount of adhered resin that was changed to 13.2% by mass from that of Example 1 were used to obtain a sample of a cushion material for hot pressing having the same configuration as that of Example 1.

(Comparative Example 1)

Cushion sheets each obtained by impregnating the same bulky glass woven fabric as that of Example 1 with fluoro rubber in a proportion of 10.5% by mass were prepared. As surface layer sheets and a bonding sheet, those to which fluoro rubber varnish was adhered in place of the polyimide resin varnish serving as the bonding layers of Example 1 were prepared, with which a sample of a cushion material for hot pressing having the same configuration as that of Example 1.

(Comparative Example 2)

There were prepared cushion sheets each having an amount of adhered resin in a proportion of 2.8% by mass with respect to a mass of its base material and a thickness of 0.75 mm obtained by causing polyimide resin (the same polyimide resin as that of Example 1) to be adhered to a twill-weave woven fabric having a weave density of warp: 34 yarns / 2.5 cm and weft: 22 yarns / 2.5 cm for which yarns each obtained by twisting four glass yarns (count 67.5 tex) (non-bulked yarns) were used as its warp and yarns each obtained by twisting four glass yarns (count 67.5 tex) (non-bulked yarns) were used as its weft, and drying the twill-weave woven fabric at 230°C × 5h. Three of these cushion sheets were stacked to obtain a sample of a cushion material for hot pressing.

(Comparative Example 3)

There were prepared cushion sheets each having an amount of adhered resin in a proportion of 3.1% by mass with respect to a mass of its base material and a thickness of 1.10 mm obtained by causing polyimide resin (the same polyimide resin as that of Example 1) to be adhered to a sateen-weave woven fabric having a weave density of warp: 45 yarns / 2.5 cm and weft: 30 yarns / 2.5 cm for which yarns each obtained by twisting four glass yarns (count 67.5 tex) (non-bulked yarns) were used as its warp and yarns each obtained by twisting four glass yarns (count 67.5 tex) (non-bulked yarns) were used as its weft, and drying the sateen-weave woven fabric at 230°C × 5 h. Two of these cushion sheets were stacked to obtain a sample of a cushion material for hot pressing.

(Comparative Example 4)

There were prepared cushion sheets made of a triple-twill-weave woven fabric (thickness: 2.40 mm) having a weave density of warp: 93 yarns / 2.5 cm and weft: 66 yarns / 2.5 cm for which yarns each obtained by twisting two poly-m-phenyleneisophthalamide spun yarns (count 59.1 tex, cotton count: 10) were used as its warp and yarns each obtained by twisting three poly-m-phenyleneisophthalamide spun yarns (count 59.1 tex, cotton count: 10) were used as its weft. A sample of a cushion material for hot pressing formed with one of the cushion sheets was obtained.

(Comparative Example 5)

There were prepared cushion sheets each having a thickness of 2.40 mm and an amount of adhered resin set in a proportion of 3.3% by mass to a mass of its base material and each obtained by impregnating the woven fabric of Comparative Example 4 with poly-m-phenyleneisophthalamide resin (concentration: 10%) and drying the woven fabric at 230°C × 5 h. A sample of a cushion material for hot pressing formed with one of the cushion sheets was obtained.

(Comparative Example 6)

There were prepared cushion sheets each having a thickness of 2.40 mm and an amount of adhered resin set in a proportion of 3.1% by mass to a weight of its base material and each obtained by impregnating the woven fabric of Comparative Example 4 with polyimide resin (the same as the polyimide resin of Example 1) and drying the woven fabric at 230°C × 5 h. A sample of a cushion material for hot pressing formed with one of the cushion sheets was obtained.

(Comparative Example 7)

There were prepared cushion sheets made of a quadruple-twill-weave woven fabric (thickness: 2.60 mm) having a weave density of warp: 109 yarns / 2.5 cm and weft: 85 yarns / 2.5 cm for which yarns each obtained by twisting two poly-m-phenyleneisophthalamide spun yarns (count 59.1 tex, cotton count: 10) were used as its warp and yarns each obtained by twisting three poly-m-phenyleneisophthalamide spun yarns (count 59.1 tex, cotton count: 10) were used as its weft. A sample of a cushion material for hot pressing formed with one of the cushion sheets was obtained.

(Comparative Example 8)

There were prepared cushion sheets each having a thickness of 2.60 mm and an amount of adhered resin set in a proportion of 3.3% by mass to a weight of its base material and each obtained by impregnating the woven fabric of Comparative Example 7 with poly-m-phenyleneisophthalamide resin (concentration: 10%) and drying the woven fabric at 230°C × 5 h. A sample of a cushion material for hot pressing formed with one of the cushion sheets was obtained.

(Comparative Example 9)

There were prepared cushion sheets each having a thickness of 2.60 mm and an amount of adhered resin set in a proportion of 3.0% by mass to a weight of its base material and each obtained by impregnating the woven fabric of Comparative Example 7 with polyimide resin (the same as the polyimide resin of Example 1) and drying the woven fabric at 230°C × 5 h. A sample of a cushion material for hot pressing formed with one of the cushion sheets was obtained.

(Comparative Example 10)

There were prepared cushion sheets having a thickness of 0.52 mm made of a twill-weave woven fabric having a weave density of warp: 68 yarns / 2.5 cm and weft: 60 yarns / 2.5 cm for which yarns each obtained by twisting two poly-p-phenylenebenzobisoxazole spun yarns (count 29.5 tex, cotton count: 20) were used as its warp and yarns each obtained by twisting two poly-p-phenylenebenzobisoxazole spun yarns (count 29.5 tex, cotton count: 20) were used as its weft. Four of these cushion sheets were stacked to obtain a sample of a cushion material for hot pressing.

(Comparative Example 11)

There were prepared cushion sheets each having an amount of adhered resin set in a proportion of 3.3% by mass to a weight of its base material and each obtained by impregnating the woven fabric of Comparative Example 10 with polyimide resin (the same as the polyimide resin of Example 1) and drying the woven fabric at 230°C × 5 h. Four of these cushion sheets were stacked to obtain a sample of a cushion material for hot pressing.

(Comparative Example 12)

There were provided cushion sheets made of nonwoven fabric having a thickness of 4.5 mm obtained by stacking three webs of poly-p-phenylenebenzobisoxazole fiber (fiber: Zylon (R) from TOYOBO CO., LTD.) and two layers of base fabric made of Victoria lawn glass cloth alternately and performing needle-punch. A sample of a cushion material for hot pressing formed with one of the cushion sheets was obtained. Note that a basis weight was set at 1350 g/m$^2$ (web: 1180 g/m$^2$, base fabric: 170 g/m$^2$).

(Comparative Example 13)

There were provided cushion sheets made of nonwoven fabric having a thickness of 5.0 mm obtained by performing needle-punch on webs made of SUS fiber. A sample of a cushion material for hot pressing formed with one of the cushion sheets was obtained.

(Comparative Example 14)

There were prepared cushion sheets each having a thickness of 5.0 mm and an amount of adhered resin set in a proportion of 3.4% by mass to a weight of its base material and each obtained by impregnating the nonwoven fabric of Comparative Example 13 with polyimide resin (the same as the polyimide resin of Example 1) and drying the woven fabric at 230°C × 5 h. A sample of a cushion material for hot pressing formed with one of the cushion sheets was obtained.
Table 1 shows base materials of various types of cushion sheets. Table 2 shows conditions for the various types of cushion sheets.

[Table 1]

[Table 1]

TABLE 1

| | | Base Material | | | | | | | | | | | | | | | |
|---|---|---|---|---|---|---|---|---|---|---|---|---|---|---|---|---|---|
| | | Materials | | Basis Weight | Yarn Count | | | | Number of Twisting Yarns | | Twisting for each Yarn | | | | Density /25.4mm | | Thickness (mm) |
| | Weave | | | | Yarn Count (tex)※1 | | Cotton Count ※2 | | | | Twist /25mm | | Twist (T/M)※3 | | | | |
| | | Warp | Weft | (g/m$^2$) | Warp | Weft | Warp | Weft | Warp | Weft | Warp | Weft | Warp | Weft | Warp | Weft | |
| A | Double-Twill-Weave | Glass Yarns | Glass Bulked Yarns | 850 | 67.5 | 67.5 | 9 | 9 | 2 | 4 | 3.8 | 3.8 | 152 | 152 | 48 | 46 | 1.00 |
| B | Twill-Weave | Glass Yarns | Glass Yarns | 635 | 67.5 | 67.5 | 9 | 9 | 4 | 4 | 3.8 | 3.8 | 152 | 152 | 34 | 22 | 0.75 |
| C | Sateen-Weave | Glass Yarns | Glass Yarns | 826 | 67.5 | 67.5 | 9 | 9 | 4 | 4 | 3.8 | 3.8 | 152 | 152 | 45 | 30 | 1.10 |
| D | Triple-Twill-Weave | Poly-m-Phenyleneisophthala mide Spun Yarns | Poly-m-Phenyleneisophthala mide Spun Yarns | 948 | 59.1 | 59.1 | 10 | 10 | 2 | 3 | 9.8 | 5.0 | 390 | 200 | 93 | 66 | 2.40 |
| E | Quadruple-Twill-Weave | Poly-m-Phenyleneisophthala mide Spun Yarns | Poly-m-Phenyleneisophthala mide Spun Yarns | 1154 | 59.1 | 59.1 | 10 | 10 | 2 | 3 | 9.8 | 5.0 | 390 | 200 | 109 | 87 | 2.60 |
| F | Twill-Weave | Poly-p-Phenylenebenzobiso xazole Spun Yarns | Poly-p-Phenylenebenzobiso xazole Spun Yarns | 320 | 29.5 | 29.5 | 20 | 20 | 2 | 2 | 9.8 | 9.8 | 390 | 390 | 68 | 60 | 0.52 |
| G | Nonwoven | Poly-p-phenylenebenzobisoxazole Fiber Webs | | 1350 | | | | | | | | | | | | | 4.50 |
| H | Nonwoven | SUS316 Webs | | 1518 | | | | | | | | | | | | | 5.00 |

※1 : 1tex A yarn that weighs 1g for 1000m
※2 : Count 1 A yarn of 840 yard(768m) lengths in one pound(453g)
※3 : Number of twists per meter

[Table 2]

TABLE 2

| | | | | Cushion Sheets | | | | |
|---|---|---|---|---|---|---|---|---|
| | | Conditions of Base Materials | | Adhesive Materials | Amount Before Adhesion (g/m$^2$) | Amount After Adhesion (g/m$^2$) | Amount (g/m$^2$) | Content (mass%) |
| Example 1 | A | Bulky Glass Cloth Double Twill Weave | | Polyimide | 850 | 875 | 15 | 1.7 |
| Example 2 | A | Bulky Glass Cloth Double Twill Weave | | Polyimide | 850 | 875 | 30 | 3.4 |
| Example 3 | A | Bulky Glass Cloth Double Twill Weave | | Polyimide | 850 | 932 | 82 | 8.8 |
| Example 4 | A | Bulky Glass Cloth Double Twill Weave | | Polyimide | 850 | 972 | 128 | 13.2 |
| Comparative Example 1 | A | Bulky Glass Cloth Double Twill Weave | | Fluoro Rubber | 850 | 950 | 100 | 10.5 |
| Comparative Example 2 | B | 3 layers of Grass Cloth Sateen Weave | | Polyimide | 635 | 653 | 18 | 2.8 |
| Comparative Example 3 | C | 2 layers of Grass Cloth Till Weave | | Polyimide | 826 | 852 | 26 | 3.1 |
| Comparative Example 4 | D | m-Alamid Cloth Triple Twill Weave | | None | 948 | - | - | - |
| Comparative Example 5 | D | m-Alamid Cloth Triple Twill Weave | | Poly-m-Phenyleneisophthalamide | 948 | 980 | 32 | 3.3 |

(continued)

| | | | Cushion Sheets | | | | | |
|---|---|---|---|---|---|---|---|---|
| | | | | Amount Before Adhesion (g/m$^2$) | Amount After Adhesion (g/m$^2$) | Amount (g/m$^2$) | Content (mass%) | |
| | | Conditions of Base Materials | Adhesive Materials | | | | | |
| Comparative Example 6 | D | m-Alamid Cloth Triple Twill Weave | Polyimide | 948 | 978 | 30 | 3.1 | |
| Comparative Example 7 | E | m-Alamid Cloth Quadruple Twill Weave | None | 1154 | - | - | - | |
| Comparative Example 8 | E | m-Alamid Cloth Quadruple Twill Weave | Poly-m-Phenyleneisophthalamide | 1154 | 1193 | 39 | 3.3 | |
| Comparative Example 9 | E | m-Alamid Cloth Quadruple Twill Weave | Polyimide | 1154 | 1190 | 36 | 3.0 | |
| Comparative Example 10 | F | PBO Cloth Quadruple Twill Weave | None | 320 | - | - | - | |
| Comparative Example 11 | F | PBO Cloth Quadruple Twill Weave | Polyimide | 320 | 331 | 11 | 3.3 | |
| Comparative Example 12 | G | PBO Non Woven | None | 1350 | - | - | - | |
| Comparative Example 13 | H | SUS Non Woven | None | 1518 | - | - | - | |
| Comparative Example 14 | H | SUS Non Woven | Polyimide | 1518 | 1572 | 54 | 3.4 | |

The various types of cushion materials for hot pressing were subjected to a pressing durability test through the following procedure to measure changes in thickness and cushioning properties before and after the test. Results of the measurement are shown in Tables 3 to 8.

[Conditions for Pressing Durability Test]

Applied pressure: 4.0 MPa
Temperatures: 400°C, 300°C, 280°C
Heating duration: 70 minutes (temperature increased from 25°C to predetermined temperature in 30 minutes and maintained for 40 minutes)
Cooling duration: 30 minutes (water cooling)

Releasing duration: 1 minute
Sample size: 200 mm square
Press machine: Compact press MHPC-VF-450-450-1-80 (from The Japan Steel Works, Ltd.)

(Method for Evaluating Thickness)

For the various types of samples, their thicknesses before pressing and thicknesses (mm) after pressing 1 time, 10 times, 50 times and 100 times were measured with a dial thickness gauge.

(Method for Evaluating Cushioning Properties)

For the various types of samples, their cushioning properties were evaluated before pressing and after pressing 1 time, 10 times, 50 times and 100 times. For the cushioning properties, the various types of samples were subjected to the following pressurization test, and compressive cushioning properties were determined from a difference in thickness ($\mu$m) before and during pressurization.

Applied pressure: 4.0 MPa
Pressurizing temperatures: 400°C, 300°C, 280°C
Preheating: 0.05 kgf/cm$^2$ $\times$ 2 min
Pressing speed: 1 mm/min
Sample size: 25 mm$\phi$
Sample taking position: One location at a position away from an edge of each sample for the durability test by 5 cm or more
Test apparatus: Instron 5565 universal material testing machine (from Instron Japan Company Limited)

[Conditions for Pressing Test to Evaluate Porosity]

For the various types of samples, porosities Fn of their cushion layers were determined before pressing and after pressing 1 time, 10 times, 50 times and 100 times. Note that, in this comparative experiment, since a size of samples for the durability test were as small as 200 mm square, the number of positions for taking a sample for evaluating the porosity Fn was determined to be only one: a position away from an edge by 5 cm or more.

Applied pressure: 10 MPa
Temperature: 25°C
Pressing speed: 5 mm/min
Sample size: 25 mm square
Sample taking position: One location at a position away from an edge of each sample for the durability test by 5 cm or more
Test apparatus: Autograph precision universal testing machine AG-X (from Shimadzu Corporation)

(Method for Evaluating Porosity)

For Examples 1 to 4 and Comparative Example 1, for which bulky glass was used as woven fabric of their cushion sheets, a thickness $t_0$ of each sample before the compression under the conditions, a thickness $t_2$ of each cushion layer 1, and a thickness $t_1$ of each sample during the compression were measured. Note that the thickness $t_0$ of the sample before the compression was measured at one spot near a center portion of the sample with a dial thickness gauge, and the thickness $t_1$ during the compression was measured with an autograph precision universal testing machine under the conditions for the pressing test to evaluate the porosity. For the thickness $t_2$ of the cushion layer 1, a cross section of a sample was observed at 50x magnification under a digital microscope (VHX series from Keyence Corporation), and a measurement tool is used to measure a distance between a line that connects two apexes of a fiber (a thread of warp or weft) meandering along the cross section of its cushion sheet that are positioned at an upper edge of the cushion sheet and a line that connects two apexes of the fiber that are positioned at a lower edge of the cushion sheet. In a case where there is a plurality of cushion sheets, a total thickness of the cushion sheets was determined as the thickness $t_2$ of a cushion layer 1. As the thickness $t_2$, an average value of the measurement at one spot near a center portion of each side of the sample (four spots in total) was determined.

[Table 3]

TABLE 3

| | Dial Thickness | | | | | Cushioning Properties | | | | | Porosity (Fn) of Cushion Layer | | | | | Evaluation |
|---|---|---|---|---|---|---|---|---|---|---|---|---|---|---|---|---|
| | Initial | Once | 10 times | 50 times | 100 times | Initial | Once | 10 times | 50 times | 100 times | Initial | Once | 10 times | 50 times | 100 times | |
| Example 1 | 1.91 | 1.85 | 1.81 | 1.78 | 1.77 | 423 | 405 | 399 | 395 | 390 | 0.28 | 0.26 | 0.24 | 0.23 | 0.23 | A |
| Example 2 | 2.40 | 2.06 | 2.03 | 1.97 | 1.96 | 536 | 460 | 458 | 454 | 440 | 0.43 | 0.31 | 0.31 | 0.31 | 0.32 | A |
| Example 3 | 2.50 | 2.12 | 2.08 | 2.03 | 2.00 | 491 | 438 | 420 | 418 | 403 | 0.38 | 0.31 | 0.30 | 0.28 | 0.28 | A |
| Example 4 | 2.58 | 2.18 | 2.15 | 2.11 | 2.11 | 482 | 401 | 390 | 385 | 381 | 0.37 | 0.23 | 0.21 | 0.21 | 0.21 | A |
| Comparative Example 1 | 2.00 | | | | | 512 | | | | | 0.34 | | | | | C |
| Comparative Example 2 | 2.25 | 1.35 | | | | 1020 | 200 | | | | | | | | | D |
| Comparative Example 3 | 2.20 | 1.10 | | | | 1236 | 112 | | | | | | | | | D |
| Comparative Example 4 | 2.40 | 0.80 | | | | 1115 | 43 | | | | | | | | | E |
| Comparative Example 5 | 2.40 | 0.90 | | | | 696 | 68 | | | | | | | | | E |
| Comparative Example 6 | 2.40 | 0.92 | | | | 563 | 64 | | | | | | | | | E |
| Comparative Example 7 | 2.60 | 0.92 | | | | 1042 | 76 | | | | | | | | | E |
| Comparative Example 8 | 2.60 | 1.05 | | | | 919 | 67 | | | | | | | | | E |
| Comparative Example 9 | 2.60 | 0.97 | | | | 828 | 79 | | | | | | | | | E |
| Comparative Example 10 | 2.08 | 1.20 | | | | 1169 | 131 | | | | | | | | | D |
| Comparative Example 11 | 2.08 | 1.23 | | | | 1150 | 134 | | | | | | | | | D |

EP 4 163 099 B1

(continued)

| | Dial Thickness | | | | | Cushioning Properties | | | | | Porosity (Fn) of Cushion Layer | | | | | Evaluation |
|---|---|---|---|---|---|---|---|---|---|---|---|---|---|---|---|---|
| | Initial | Once | 10 times | 50 times | 100 times | Initial | Once | 10 times | 50 times | 100 times | Initial | Once | 10 times | 50 times | 100 times | |
| Comparative Example 12 | 4.50 | 1.53 | 1.48 | | | 2529 | 597 | 271 | | | | | | | | F |
| Comparative Example 13 | 5.00 | 1.90 | 1.50 | 1.45 | | 4013 | 1001 | 408 | 372 | | | | | | | G |
| Comparative Example 14 | 5.00 | 1.60 | 1.43 | 1.40 | | 3059 | 674 | 393 | 368 | | | | | | | G |
| Test Temperature: 400°C | | | | | | | | | | | | | | | | |

[Table 4]

TABLE 4

| | Dial Thickness Maintenance Rate(%) | | | | | Cushioning Properties Maintenance Rate(%) | | | | | Evaluation |
|---|---|---|---|---|---|---|---|---|---|---|---|
| | Initial | Once | 10 times | 50 times | 100 times | Initial | Once | 10 times | 50 times | 100 times | |
| Example 1 | 100 | 96.9 | 94.8 | 93.2 | 92.7 | 100.0 | 95.7 | 94.3 | 93.4 | 92.2 | A |
| Example 2 | 100 | 85.8 | 84.6 | 82.1 | 81.7 | 100.0 | 86.0 | 85.6 | 84.8 | 82.2 | A |
| Example 3 | 100 | 84.8 | 83.2 | 81.2 | 80.0 | 100.0 | 89.1 | 85.6 | 85.1 | 82.1 | A |
| Example 4 | 100 | 84.5 | 83.3 | 81.8 | 81.8 | 100.0 | 83.2 | 80.9 | 79.9 | 79.0 | A |
| Comparative Example 1 | 100 | | | | | 100.0 | | | | | C |
| Comparative Example 2 | 100 | 60.0 | | | | 100.0 | 19.6 | | | | D |
| Comparative Example 3 | 100 | 50.0 | | | | 100.0 | 9.1 | | | | D |
| Comparative Example 4 | 100 | 33.3 | | | | 100.0 | 3.9 | | | | E |
| Comparative Example 5 | 100 | 37.5 | | | | 100.0 | 9.8 | | | | E |
| Comparative Example 6 | 100 | 38.3 | | | | 100.0 | 11.3 | | | | E |
| Comparative Example 7 | 100 | 35.4 | | | | 100.0 | 7.3 | | | | E |
| Comparative Example 8 | 100 | 40.4 | | | | 100.0 | 7.3 | | | | E |
| Comparative Example 9 | 100 | 37.3 | | | | 100.0 | 9.5 | | | | E |
| Comparative Example 10 | 100 | 57.7 | | | | 100.0 | 11.2 | | | | D |
| Comparative Example 11 | 100 | 59.1 | | | | 100.0 | 11.7 | | | | D |
| Comparative Example 12 | 100 | 34.0 | 32.9 | | | 100.0 | 23.6 | 10.7 | | | F |
| Comparative Example 13 | 100 | 38.0 | 30.0 | 29.0 | | 100.0 | 25.0 | 10.2 | 9.3 | | G |
| Comparative Example 14 | 100 | 32.0 | 28.6 | 28.0 | | 100.0 | 22.0 | 12.8 | 12.0 | | G |
| Test Temperature: 400°C | | | | | | | | | | | |

[Table 5]

TABLE 5

| | Dial Thickness | | | | | Cushioning Properties | | | | | Porosity (Fn) of Cushion Layer | | | | | Evaluation |
|---|---|---|---|---|---|---|---|---|---|---|---|---|---|---|---|---|
| | Initial | Once | 10 times | 50 times | 100 times | Initial | Once | 10 times | 50 times | 100 times | Initial | Once | 10 times | 50 times | 100 times | |
| Example 1 | 1.91 | 1.85 | 1.82 | 1.81 | 1.81 | 423 | 408 | 403 | 402 | 400 | 0.28 | 0.27 | 0.25 | 0.25 | 0.25 | A |
| Example 2 | 2.40 | 2.25 | 2.16 | 2.12 | 2.10 | 531 | 489 | 465 | 452 | 450 | 0.43 | 0.37 | 0.34 | 0.33 | 0.32 | A |
| Example 3 | 2.50 | 2.27 | 2.20 | 2.18 | 2.16 | 481 | 448 | 431 | 428 | 425 | 0.38 | 0.35 | 0.33 | 0.32 | 0.30 | A |
| Example 4 | 2.58 | 2.28 | 2.22 | 2.18 | 2.16 | 476 | 416 | 410 | 397 | 395 | 0.37 | 0.28 | 0.25 | 0.23 | 0.22 | A |
| Comparative Example 1 | 2.00 | 1.64 | | | | 506 | 241 | | | | 0.34 | 0.18 | | | | B |
| Comparative Example 2 | 2.25 | 1.43 | | | | 1026 | 354 | | | | | | | | | D |
| Comparative Example 3 | 2.20 | 1.36 | | | | 1230 | 298 | | | | | | | | | D |
| Comparative Example 4 | 2.40 | 1.10 | | | | 1120 | 81 | | | | | | | | | D |
| Comparative Example 5 | 2.40 | 1.41 | | | | 702 | 79 | | | | | | | | | D |
| Comparative Example 6 | 2.40 | 1.50 | | | | 566 | 82 | | | | | | | | | D |
| Comparative Example 7 | 2.60 | 1.38 | | | | 1028 | 90 | | | | | | | | | D |
| Comparative Example 8 | 2.60 | 1.65 | | | | 911 | 93 | | | | | | | | | D |
| Comparative Example 9 | 2.60 | 1.60 | | | | 831 | 104 | | | | | | | | | D |
| Comparative Example 10 | 2.08 | 1.32 | | | | 1164 | 189 | | | | | | | | | D |
| Comparative Example 11 | 2.08 | 1.35 | | | | 1141 | 204 | | | | | | | | | D |

EP 4 163 099 B1

(continued)

| | Dial Thickness | | | | | Cushioning Properties | | | | | Porosity (Fn) of Cushion Layer | | | | | Evaluation |
|---|---|---|---|---|---|---|---|---|---|---|---|---|---|---|---|---|
| | Initial | Once | 10 times | 50 times | 100 times | Initial | Once | 10 times | 50 times | 100 times | Initial | Once | 10 times | 50 times | 100 times | |
| Comparative Example 12 | 4.50 | 1.72 | 1.57 | 1.45 | | 2522 | 671 | 472 | 428 | | | | | | | H |
| Comparative Example 13 | 5.00 | 2.10 | 1.73 | 1.62 | 1.56 | 4122 | 1098 | 557 | 436 | 411 | | | | | | G |
| Comparative Example 14 | 5.00 | 1.90 | 1.72 | 1.58 | 1.53 | 3075 | 978 | 527 | 423 | 402 | | | | | | G |
| Test Temperature: 300°C | | | | | | | | | | | | | | | | |

[Table 6]

TABLE 6

| | Dial Thickness Maintenance Rate(%) | | | | | Cushioning Properties Maintenance Rate(%) | | | | | Evaluation |
|---|---|---|---|---|---|---|---|---|---|---|---|
| | Initial | Once | 10 times | 50 times | 100 times | Initial | Once | 10 times | 50 times | 100 times | |
| Example 1 | 100.0 | 96.9 | 95.3 | 94.8 | 94.8 | 100.0 | 96.5 | 95.3 | 95.0 | 94.6 | A |
| Example 2 | 100.0 | 93.8 | 90.0 | 88.3 | 87.5 | 100.0 | 92.2 | 87.6 | 85.2 | 84.8 | A |
| Example 3 | 100.0 | 90.8 | 88.0 | 87.2 | 86.4 | 100.0 | 93.1 | 89.6 | 89.0 | 88.4 | A |
| Example 4 | 100.0 | 88.4 | 86.0 | 84.5 | 83.7 | 100.0 | 87.4 | 86.1 | 83.4 | 83.0 | A |
| Comparative Example 1 | 100.0 | 82.0 | | | | 100.0 | 47.6 | | | | B |
| Comparative Example 2 | 100.0 | 63.6 | | | | 100.0 | 34.5 | | | | D |
| Comparative Example 3 | 100.0 | 61.8 | | | | 100.0 | 24.2 | | | | D |
| Comparative Example 4 | 100.0 | 45.8 | | | | 100.0 | 7.3 | | | | D |
| Comparative Example 5 | 100.0 | 58.8 | | | | 100.0 | 11.3 | | | | D |
| Comparative Example 6 | 100.0 | 62.5 | | | | 100.0 | 14.5 | | | | D |
| Comparative Example 7 | 100.0 | 53.1 | | | | 100.0 | 8.8 | | | | D |
| Comparative Example 8 | 100.0 | 63.5 | | | | 100.0 | 10.3 | | | | D |
| Comparative Example 9 | 100.0 | 61.5 | | | | 100.0 | 12.5 | | | | D |
| Comparative Example 10 | 100.0 | 63.5 | | | | 100.0 | 16.2 | | | | D |
| Comparative Example 11 | 100.0 | 64.9 | | | | 100.0 | 17.8 | | | | D |
| Comparative Example 12 | 100.0 | 38.2 | 34.9 | 32.2 | | 100.0 | 26.6 | 18.7 | 17.0 | | H |
| Comparative Example 13 | 100.0 | 42.0 | 34.6 | 32.4 | 31.2 | 100.0 | 26.6 | 13.5 | 10.6 | 10.0 | G |
| Comparative Example 14 | 100.0 | 38.0 | 34.4 | 31.6 | 30.6 | 100.0 | 31.8 | 17.1 | 13.8 | 13.1 | G |
| Test Temperature: 300°C | | | | | | | | | | | |

[Table 7]

TABLE 7

| | Dial Thickness | | | | | Cushioning Properties | | | | | Porosity (Fn) of Cushion Layer | | | | | Evaluation |
|---|---|---|---|---|---|---|---|---|---|---|---|---|---|---|---|---|
| | Initial | Once | 10 times | 50 times | 100 times | Initial | Once | 10 times | 50 times | 100 times | Initial | Once | 10 times | 50 times | 100 times | |
| Example 1 | 1.91 | 1.85 | 1.81 | 1.79 | 1.78 | 428 | 415 | 410 | 408 | 405 | 0.28 | 0.27 | 0.26 | 0.25 | 0.25 | A |
| Example 2 | 2.40 | 2.28 | 2.21 | 2.16 | 2.15 | 534 | 514 | 496 | 488 | 476 | 0.43 | 0.38 | 0.36 | 0.32 | 0.33 | A |
| Example 3 | 2.50 | 2.25 | 2.23 | 2.20 | 2.19 | 483 | 462 | 451 | 444 | 442 | 0.38 | 0.32 | 0.33 | 0.31 | 0.31 | A |
| Example 4 | 2.58 | 2.18 | 2.15 | 2.11 | 2.11 | 490 | 426 | 420 | 402 | 398 | 0.37 | 0.28 | 0.25 | 0.24 | 0.24 | A |
| Comparative Example 1 | 2.00 | 1.78 | 1.71 | | | 520 | 342 | 272 | | | 0.26 | 0.19 | 0.15 | | | B |
| Comparative Example 2 | 2.25 | 1.56 | 1.43 | | | 1012 | 436 | 356 | | | | | | | | D |
| Comparative Example 3 | 2.20 | 1.48 | 1.39 | | | 1230 | 397 | 303 | | | | | | | | D |
| Comparative Example 4 | 2.40 | 1.62 | | | | 1126 | 145 | | | | | | | | | D |
| Comparative Example 5 | 2.40 | 1.68 | | | | 691 | 98 | | | | | | | | | D |
| Comparative Example 6 | 2.40 | 1.62 | | | | 569 | 125 | | | | | | | | | D |
| Comparative Example 7 | 2.60 | 1.51 | | | | 1040 | 222 | | | | | | | | | D |
| Comparative Example 8 | 2.60 | 1.90 | | | | 912 | 114 | | | | | | | | | D |
| Comparative Example 9 | 2.60 | 1.90 | | | | 831 | 180 | | | | | | | | | D |
| Comparative Example 10 | 2.08 | 1.41 | | | | 1176 | 350 | | | | | | | | | D |
| Comparative Example 11 | 2.08 | 1.42 | | | | 1156 | 268 | | | | | | | | | D |

(continued)

| | Dial Thickness | | | | | Cushioning Properties | | | | | Porosity (Fn) of Cushion Layer | | | | | Evaluation |
|---|---|---|---|---|---|---|---|---|---|---|---|---|---|---|---|---|
| | Initial | Once | 10 times | 50 times | 100 times | Initial | Once | 10 times | 50 times | 100 times | Initial | Once | 10 times | 50 times | 100 times | |
| Comparative Example 12 | 4.50 | 1.96 | 1.90 | 1.81 | 1.76 | 2502 | 730 | 534 | 496 | 463 | | | | | | G |
| Comparative Example 13 | 5.00 | 2.05 | 1.85 | 1.80 | 1.78 | 4033 | 1075 | 682 | 566 | 542 | | | | | | G |
| Comparative Example 14 | 5.00 | 2.01 | 1.82 | 1.78 | 1.75 | 3065 | 1031 | 663 | 552 | 531 | | | | | | G |
| Test Temperature: 280°C | | | | | | | | | | | | | | | | |

[Table 8]

TABLE 8

| | Dial Thickness Maintenance Rate(%) | | | | | Cushioning Properties Maintenance Rate(%) | | | | | Evaluation |
|---|---|---|---|---|---|---|---|---|---|---|---|
| | Initial | Once | 10 times | 50 times | 100 times | Initial | Once | 10 times | 50 times | 100 times | |
| Example 1 | 100.0 | 96.9 | 94.8 | 93.7 | 93.2 | 100.0 | 97.0 | 95.8 | 95.3 | 94.6 | A |
| Example 2 | 100.0 | 95.0 | 92.1 | 90.0 | 89.6 | 100.0 | 96.3 | 93.0 | 91.5 | 89.2 | A |
| Example 3 | 100.0 | 90.0 | 89.2 | 88.0 | 87.6 | 100.0 | 95.7 | 93.4 | 91.9 | 91.5 | A |
| Example 4 | 100.0 | 84.5 | 83.3 | 81.8 | 81.8 | 100.0 | 86.9 | 85.7 | 82.0 | 81.2 | A |
| Comparative Example 1 | 100.0 | 89.0 | 85.5 | | | 100.0 | 65.8 | 52.2 | | | B |
| Comparative Example 2 | 100.0 | 69.3 | 63.6 | | | 100.0 | 43.1 | 35.2 | | | D |
| Comparative Example 3 | 100.0 | 67.3 | 63.2 | | | 100.0 | 32.2 | 24.6 | | | D |
| Comparative Example 4 | 100.0 | 67.5 | | | | 100.0 | 12.9 | | | | D |
| Comparative Example 5 | 100.0 | 70.0 | | | | 100.0 | 14.2 | | | | D |
| Comparative Example 6 | 100.0 | 67.5 | | | | 100.0 | 22.0 | | | | D |
| Comparative Example 7 | 100.0 | 58.1 | | | | 100.0 | 21.3 | | | | D |
| Comparative Example 8 | 100.0 | 73.1 | | | | 100.0 | 12.5 | | | | D |
| Comparative Example 9 | 100.0 | 73.1 | | | | 100.0 | 21.7 | | | | D |
| Comparative Example 10 | 100.0 | 67.8 | | | | 100.0 | 29.8 | | | | D |
| Comparative Example 11 | 100.0 | 68.3 | | | | 100.0 | 23.2 | | | | D |
| Comparative Example 12 | 100.0 | 43.6 | 42.2 | 40.2 | 39.1 | 100.0 | 29.2 | 21.3 | 19.8 | 18.5 | G |
| Comparative Example 13 | 100.0 | 41.0 | 37.0 | 36.0 | 35.6 | 100.0 | 26.7 | 16.9 | 14.0 | 13.4 | G |
| Comparative Example 14 | 100.0 | 40.2 | 36.4 | 35.6 | 35.0 | 100.0 | 33.6 | 21.6 | 18.0 | 17.3 | G |
| Test Temperature: 280°C | | | | | | | | | | | |

As shown in Tables 2 to 8, Examples 1 to 4, which satisfied the conditions according to the present invention, had good cushioning properties at all the test temperatures. That is, Examples 1 to 4 maintained high porosities after pressing 100 times at all of the test temperatures and had good durability and cushioning properties. In contrast, Comparative Examples 1 to 14 caused extreme decreases in their thicknesses and cushioning properties after the test performed only once. In particular, in the test at 400°C, Comparative Example 1 caused carbonization of its fluoro rubber, and Comparative Examples 4 to 9 also caused carbonization and degradation of their poly-m-phenyleneisophthalamide fibers; thus, Comparative Example 1 and Comparative Examples 4 to 9 did not have sufficient heat resistance. In addition, Comparative Examples 13 and 14 caused significant decreases in their thickness and cushioning properties in the durability test; thus Comparative Examples 13 and 14 failed to provide stable cushioning properties when used repeatedly.

In Tables 3 to 8, meanings of A to G in "Evaluation" are as follows.

A: Good
B: Cushioning properties decreased after pressing once
C: Rubber was carbonized. In addition, surface layer was peeled off, failing to maintain its shape
D: Thickness and cushioning properties significantly decreased after pressing once
E: Carbonized and degraded after pressing once
F: Crack occurred after pressing ten times. In addition, thickness and cushioning properties significantly decreased
G: Thickness and cushioning properties significantly decreased
H: Crack occurred after pressing 50 times. Thickness and cushioning properties significantly decreased

INDUSTRIAL APPLICABILITY

According to the present invention, it is possible to provide a cushion material for hot pressing that can maintain good cushioning properties even when used in high-temperature pressing at 280°C or more repeatedly.

REFERENCE SIGNS LIST

| 1 | cushion layer |
|---|---|
| 2 | surface layer |
| 3 | bonding layer |
| 4 | bonding sheet part |
| 5 | woven fabric |
| 5a | warp |
| 5b | weft |
| 6 | polyimide resin |
| 7 | pore |
| 11 | cushion material |
| 12 | workpiece to be pressed |
| 13, 13 | heating platen |
| 14 | mirror plate |

**Claims**

1. A cushion material (10, 10a, 10b, 10c, 11) for hot pressing comprising a cushion layer (1), wherein

   the cushion layer (1) comprises woven fabric (5) formed by fibers, the cushion layer (1) involves pores (7) inside thereof, and
   warp (5a) and/or weft (5b) of the woven fabric (5) is texturized yarns made of glass fibers, **characterized by** polyimide resin (6) adhered to the surfaces of the fibers forming the woven fabric (5).

2. The cushion material (10, 10a, 10b, 10c, 11) for hot pressing according to claim 1, wherein when a thickness of the cushion material (10, 10a, 10b, 10c, 11) for hot pressing is denoted by $t_0$, a thickness of the cushion material (10, 10a, 10b, 10c, 11) for hot pressing when the cushion material (10, 10a, 10b, 10c, 11) for hot pressing is compressed under conditions of 25°C and 10.0 MPa is denoted by $t_1$, and a thickness of the cushion layer (1) is denoted by $t_2$, Fn determined from following Formula (1) is 0.20 or more, wherein the ticknesses $t_0$, $t_1$ and $t_2$ are measured according to the description.

$$Fn = (t_0 - t_1) / t_2 \quad (1)$$

3. The cushion material (10, 10a, 10b, 10c, 11) for hot pressing according to claim 2, wherein Fn determined from above Formula (1) is 0.20 or more after pressing once under conditions that a pressurization condition is 4.0 MPa, a temperature is increased from 25°C to 300°C in 30 minutes, the temperature is maintained for 40 minutes, and water cooling is subsequently performed for 30 minutes.

**Patentansprüche**

1. Polstermaterial (10, 10a, 10b, 10c, 11) zum Heißpressen, umfassend eine Polsterschicht (1), wobei

   die Polsterschicht (1) ein Gewebe (5) umfasst, das aus Fasern gebildet ist,
   die Polsterschicht (1) Poren (7) in ihrem Inneren umfasst, und
   Kette (5a) und/oder Schuss (5b) des Gewebes (5) texturierte Garne aus Glasfasern sind, **gekennzeichnet durch** Polyimidharz (6), das an den Oberflächen der das Gewebe (5) bildenden Fasern haftet.

2. Polstermaterial (10, 10a, 10b, 10c, 11) zum Heißpressen nach Anspruch 1, wobei, wenn eine Dicke des Polstermaterials (10, 10a, 10b, 10c, 11) zum Heißpressen mit $t_0$ bezeichnet wird, eine Dicke des Polstermaterials (10, 10a, 10b, 10c, 11) zum Heißpressen, wenn das Polstermaterial (10, 10a, 10b, 10c, 11) zum Heißpressen unter Bedingungen von 25 °C und 10,0 MPa komprimiert wird, mit $t_1$ bezeichnet wird, und eine Dicke der Polsterschicht (1) mit $t_2$ bezeichnet wird, Fn, das aus der folgenden Formel (1) bestimmt wird, 0,20 oder mehr beträgt, wobei die Dicke $t_0$, $t_1$ und $t_2$ gemäß der Beschreibung gemessen werden

$$Fn = (t_0 - t_1) / t_2 \qquad (1)$$

3. Polstermaterial (10, 10a, 10b, 10c, 11) zum Heißpressen nach Anspruch 2, wobei Fn, das aus der obigen Formel (1) bestimmt wird, nach einmaligem Pressen unter Bedingungen, dass eine Druckbeaufschlagungsbedingung 4,0 MPa beträgt, 0,20 oder mehr beträgt, eine Temperatur in 30 Minuten von 25 °C auf 300 °C erhöht wird, die Temperatur für 40 Minuten gehalten wird und anschließend eine Wasserkühlung für 30 Minuten durchgeführt wird.

**Revendications**

1. Matériau amortisseur (10, 10a, 10b, 10c, 11) pour pressage à chaud comprenant une couche amortisseuse (1), dans lequel
   la couche amortisseuse (1) comprend un textile tissé (5) formé de fibres, la couche amortisseuse (1) comporte des pores (7) à l'intérieur de celle-ci, et une chaîne (5a) et/ou une trame (5b) du textile tissé (5) sont des fils texturés constitués de fibres de verre, **caractérisé par** une résine polyimide (6) adhérant aux surfaces des fibres formant le textile tissé (5).

2. Matériau amortisseur (10, 10a, 10b, 10c, 11) pour pressage à chaud selon la revendication 1, dans lequel lorsqu'une épaisseur du matériau amortisseur (10, 10a, 10b, 10c, 11) pour pressage à chaud est désignée par $t_0$, une épaisseur du matériau amortisseur (10, 10a, 10b, 10c, 11) pour pressage à chaud lorsque le matériau amortisseur (10, 10a, 10b, 10c, 11) pour pressage à chaud est comprimé dans des conditions de 25 °C et 10,0 MPa est désignée par $t_1$, et une épaisseur de la couche amortisseuse (1) est désignée par $t_2$, Fn déterminée à partir de la Formule (1) suivante est de 0,20 ou plus, dans lequel les épaisseurs $t_0$, $t_1$ et $t_2$ sont mesurées selon la description.

$$Fn = (t_0 - t_1)/t_2 \quad (1)$$

3. Matériau amortisseur (10, 10a, 10b, 10c, 11) pour pressage à chaud selon la revendication 2, dans lequel Fn déterminée à partir de la formule (1) ci-dessus est de 0,20 ou plus après un seul pressage dans des conditions dans lesquelles une condition de pressurisation est de 4,0 MPa, une température est augmentée de 25 °C à 300 °C en 30 minutes, la température est maintenue pendant 40 minutes, et un refroidissement par eau est ensuite effectué pendant 30 minutes.

FIGURE 1

FIGURE 2

FIGURE 3

1b

FIGURE 4

10a

2

3

1

3

2

FIGURE 5

FIGURE 6

FIGURE 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008065969 A
- WO 2012169011 A1
- WO 2004103691 A1